(19) Europäisches Patentamt
European Patent Office
Office européen des brevets

(11) Veröffentlichungsnummer: **0 185 918**
**B1**

(12) # EUROPÄISCHE PATENTSCHRIFT

(45) Veröffentlichungstag der Patentschrift: **27.09.89**

(51) Int. Cl.⁴: **C 08 F 10/00**, C 08 F 4/64

(21) Anmeldenummer: **85114612.6**

(22) Anmeldetag: **18.11.85**

(54) **Verfahren zur Herstellung von Polyolefinen.**

(30) Priorität: **27.11.84 DE 3443087**

(43) Veröffentlichungstag der Anmeldung: **02.07.86 Patentblatt 86/27**

(45) Bekanntmachung des Hinweises auf die Patenterteilung: **27.09.89 Patentblatt 89/39**

(84) Benannte Vertragsstaaten: **BE DE FR GB IT NL**

(56) Entgegenhaltungen:
**EP-A- 0 128 045**
**EP-A- 0 129 368**

(73) Patentinhaber: **HOECHST AKTIENGESELLSCHAFT, Postfach 80 03 20, D-6230 Frankfurt am Main 80 (DE)**

(72) Erfinder: **Kaminsky, Walter, Prof. Dr., Buschweg 52, D-2080 Pinneberg (DE)**
Erfinder: **Külper, Klaus, Schützenstrasse 26, D-2000 Hamburg 50 (DE)**
Erfinder: **Buschermöhle, Maria, Julius-Brecht-Strasse 3, D-2000 Hamburg 52 (DE)**
Erfinder: **Lüker, Hartmut, Hinter den Tannen 18, D-2000 Hamburg 65 (DE)**

**EP 0 185 918 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Polymerisation von Propylen und höheren 1-Olefinen sowie zur Copolymerisation von Propylen mit Ethylen oder höheren 1-Olefinen unter Verwendung neuer Ziegler-Katalysatorsysteme. Die Erfindung betrifft insbesondere ein Verfahren zur Herstellung von Propylen-Homo- und Copolymerisaten, wobei die Polymerisation durchgeführt wird in Gegenwart eines Katalysatorsystems, welches aus einer stereorigiden, chiralen Zirkonverbindung und einer Sauerstoff enthaltenden Aluminiumalkylverbindung besteht.

Für die Herstellung von Polypropylen mit hoher Isotaktizität werden in jüngerer Zeit insbesondere sogenannte Trägerkatalysatorsysteme eingesetzt. Es handelt sich hierbei um Mischkatalysatoren, deren Übergangsmetallkomponente beispielsweise durch Inberührungbringen von einem Magnesiumhalogenid, einem Elektronendonator und einer Titanverbindung hergestellt wird und bei dem Aluminiumalkyle als Aktivator eingesetzt werden. Derartige Katalysatoren sind beispielsweise in der DE-OS 22 30 672 und in der EP-PS 7061 beschrieben. Diese Katalysatorsysteme besitzen eine hohe Aktivität, und man erhält mit ihnen Polypropylen, das charakterisiert ist durch eine hohe Isotaktizität und eine breite Molekulargewichtsverteilung $M_w/M_n$ von 7 bis 11.

Bekannt sind auch lösliche Ziegler-Katalysatoren. So sind beispielsweise in der DE-OS 30 07 725 und 31 27 133 Verfahren zur Herstellung von Polyolefinen beschrieben, die unter Verwendung von bis-(Cyclopentadienyl)-Zirkonium-Alkyl bzw. -Halogen-Verbindungen in Kombination mit oligomeren Aluminoxanen durchgeführt werden.

Diese löslichen Katalysatorsysteme zeigen bei der Polymerisation von Ethylen und Propylen zwar eine sehr hohe Aktivität, im Falle der Propylen-Polymerisation erhält man jedoch ein Produkt mit sehr geringer Stereospezifität, das heißt man erhält ganz überwiegend ataktisches Polypropylen.

Die Polymerisation von Ethylen, gegebenenfalls unter Zusatz geringer Mengen anderer 1-Olefine, mit einem Ziegler-Katalysator wird in den Artikel 54(3)-Dokumenten EP-A-O 128 045 und EP-A-O 129 368 beschrieben.

Es wurde nun gefunden, daß man bei der Polymerisation von Propylen und anderen höheren 1-Olefinen in Gegenwart eines Katalysatorsystems aus

a) Ethylen-bis(4,5,6,7-tetrahydroindenyl)-zirkoniumdichlorid und

b) einer Aluminium enthaltenden Verbindung des Aluminoxan-Typs der allgemeinen Formeln

$$Al_2OR_4(Al[R]\text{-}O)_n$$

für ein lineares Aluminoxan und

$$(Al[R]\text{-}O)_{n+2}$$

für cyclisches Aluminoxan, mit n als ganzer Zahl von 4 bis 20 und R als Methyl oder Ethyl,

besteht, Polymerisate erhält, die einen hohen Isotaktizitätsgrad aufweisen und eine enge Molekulargewichtsverteilung besitzen. Die Katalysatorsysteme sind außerdem außerordentlich aktiv.

Das stereorigide chirale Ethylen-bis(4,5,6,7-tetrahydroindenyl)-zirkoniumdichlorid kann als Racemat eingesetzt werden. Verwendet werden kann aber auch die reine D- oder L-Form.

Als aluminiumorganische Katalysatorkomponente werden Aluminoxane verwendet der allgemeinen Formeln $Al_2OR_4(Al[R]\text{-}O)_n$ für lineares Aluminoxan und $(Al[R]\text{-}O)_{n+2}$ für cyclisches Aluminoxan, in denen n eine ganze Zahl von 4 bis 20 und R ein Methyl oder Ethylrest, vorzugsweise ein Methylrest, ist. Die Herstellung derartiger Verbindungen ist bekannt. Es ist wichtig, daß die Aluminoxane einen Polymerisationsgrad von wenigstens 6 besitzen, vorzugsweise liegt er über 10.

Als Monomere werden bei der Herstellung von Homopolymerisaten Olefine der Formel $CH_2=CHR$ mit R gleich $C_1$- bis $C_{10}$-Alkyl eingesetzt. Bevorzugt ist die Verwendung von Propylen. Bei der Herstellung von Copolymerisaten werden die genannten Olefine im Gemisch oder in Mischung mit Ethylen eingesetzt. Das Verhältnis der Monomeren zueinander ist bei der Herstellung der Copolymerisate in weiten Bereichen variierbar. Insbesondere ist es möglich, auch Ethylen in erheblichen Mengen, beispielsweise auch von mehr als 50%, mit einzupolymerisieren. Durch Wahl der Comonomeren und des jeweiligen Mischungsverhältnisses können die Eigenschaften des Copolymerisats in weiten Bereichen variiert werden.

Die Polymerisation wird durchgeführt in Lösemitteln, in den flüssigen Monomeren oder in der Gasphase. Es ist vorteilhaft, wenn bei der Polymerisation in Lösemitteln eine Aluminoxankonzentration von $10^{-4}$ bis $10^{-1}$ Mol pro Liter sowie Aluminium und Zirkon im atomaren Verhältnis von 10:1 bis $10^8$:1 angewendet werden.

Die Polymerisation wird durchgeführt bei einer Temperatur im Bereich von $-50$ bis 200 °C, vorzugsweise aber bei $-20$ bis 120 °C, besonders bevorzugt ist der Bereich zwischen $-20$ und $+60$ °C.

Die mittlere Molmasse der gebildeten Polymeren läßt sich durch Wasserstoffzugabe und/oder Variation der Temperatur in an sich bekannter Weise steuern. Bei tiefen Temperaturen werden höhere, bei höheren Temperaturen niedrigere Molmassen erreicht.

Die durch das erfindungsgemäße Verfahren erhaltenen Polyolefine zeichnen sich aus durch einen sehr hohen Grad an Isotaktizität. Während bisher bekannte Polypropylene (Methode zur Bestimmung des Isotaktizitätsindex, vgl. F. Kloos, H.G. Leugering, JUPAC Macro Florence Reprints 2, 479 [1980]), einen löslichen Anteil von mindestens 2 bis 7 Gew.-% aufweisen, bestimmt nach Umkristallisation in Kohlenwasserstoffen, lassen sich nach dem erfindungsgemäßen Verfahren Polypropylene herstellen, die – nach der gleichen Methode untersucht – einen löslichen Anteil von wesentlich weniger als 1% aufweisen. 99 Gew.-% und mehr des nach dem erfindungsgemässen Verfahren erhaltenen Polypropylens sind somit kristallin.

Die erfindungsgemäß hergestellten Polyolefine zeichnen sich ferner durch eine überaus enge Molekulargewichtsverteilung aus. Während nach bekannten Verfahren hergestellte Polypropylene üblicherweise eine Molekulargewichtsverteilung im Bereich von Mw/Mn = 7 bis 11 aufweisen, besitzen die nach dem erfindungsgemäßen Verfahren hergestellten Polypropylene eine Molekulargewichtsverteilung Mw/Mn bis hinunter zu etwa 2. Dadurch resultiert ein Eigenschaftsbild der Polymerisate, das sie für das Spritzgiessen, insbesondere zur Herstellung von Präzisionsteilen usw. besonders geeignet macht.

Die bei dem erfindungsgemäßen Verfahren eingesetzten Katalysatorsysteme sind darüber hinaus besonders aktiv. Die Aktivität dieser Katalysatorsysteme übertrifft beispielsweise noch jener Katalysatoren, bei denen Cyclopentadienylzirkoniumverbindungen und Aluminoxan eingesetzt werden und mittels derer ataktisches Polypropylen erhalten wird.

Beispiel 1

a) Herstellung von Methylaluminoxan

44,3 g $Al_2(SO_4)_3 \cdot 16\ H_2O$ (0,056 Mol, entsprechend 1 Mol $H_2O$) wurden in 250 ml Toluol suspendiert, mit 50 ml Trimethylaluminium (0,52 Mol) versetzt und bei 20 °C zur Reaktion gebracht. Nach 30 Stunden Reaktionszeit sind etwa 0,9 Mol Methan entwickelt worden. Anschließend wurde die Lösung von festem Aluminiumsulfat abfiltriert. Durch Abziehen des Toluols wurden 19,7 g Methylaluminoxan erhalten. Die Ausbeute betrug 63% d.Th. Das kryoskopisch in Benzol bestimmte mittlere Molekulargewicht lag bei 1170.

Der mittlere Oligomerisationsgrad betrug etwa 16.

b) Herstellung von Ethylen-bis-(4,5,6,7tetrahydroindenyl)zirkoniumdichlorid

Die Herstellung erfolgte in der gleichen Weise wie im Journal of Organometallic Chemistry, 232 (1982) Seite 245/246 für Ethylen-bis(4,5,6,7-tetrahydroindenyl)titandichlorid beschrieben.

c) Polymerisation

Ein ausgeheizter, mehrfach mit Argon gespülter 1-Liter-Glasautoklav wurde unter Thermostatisierung auf +20 °C mit 330 ml absolutem Toluol, 360 mg Methylalumoxan mit einem mittleren Oligomerisationsgrad von 16 sowie $3{,}3 \times 10^{-6}$ Mol racemischem Ethylen-bis-(4,5,6,7-tetrahydroindenyl)zirkoniumdichlorid gefüllt. In diese Lösung wurden schnell 70 ml Propylen einkondensiert, wobei sich nach wenigen Minuten der Ansatz trübte. Dabei fiel der Druck von 3,1 bar nach 2 Stunden Polymerisationszeit auf 1,5 bar ab. Die Polymerisation wurde dann durch Abblasen des überschüssigen Monomeren unter Zugabe von Ethanol beendet. Katalysatorreste wurden durch Rühren mit HCl-Lösung entfernt und das Polymere anschließend abgesaugt und bis zur Gewichtskonstanz bei 60 °C getrocknet. Die Ausbeute an weißem, pulverigem, isotaktischem Polypropylen betrug 31,3 mg, die Aktivität lag somit bei 4750 kg PP/Mol Zr.h. bei einem Mn von 41000.

Der Gehalt an ataktischem Polypropylen (APP) betrug 1,0% (löslicher Anteil in einer hochsiedenden Benzinfraktion bei 130 °C). Die GPC-Messung in 1.2.4-Trichlorbenzol/135 °C ergab einen $M_w/M_n$-Wert von 1,9.

Beispiel 2

Es wurde wie in Beispiel 1 gearbeitet, jedoch bei einer Temperatur von 15 °C polymerisiert. Nach 170 Minuten Polymerisationszeit wurden 26,7 g isotaktisches Polypropylen erhalten. Die Aktivität betrug 2880 kg PP/Mol Zr.h bei einem Mη von 54000. Die APP-Bestimmung ergab einen Anteil von 0,7%. Der $M_W/M_n$-Wert lag bei 2,0.

Beispiel 3

Es wurde wie in Beispiel 1 gearbeitet. Die Polymerisationstemperatur betrug 0 °C, die Polymerisationszeit lag bei 255 Minuten. Nach dieser Zeit wurden 12,5 g isotaktisches Polypropylen erhalten. Die Aktivität betrug 880 kg PP/Mol Zr.h bei einem Mn von 134 000. Der $M_w/M_n$-Wert lag bei 2,6. Die APP-Bestimmung ergab 0,2%.

Beispiel 4

Es wurde wie in Beispiel 1 gearbeitet, jedoch wurde bei einer Temperatur von −10 °C polymerisiert. Nach 270 Minuten Polymerisationszeit wurden 4,5 g isotaktisches Polypropylen erhalten. Die Aktivität betrug 300 kg PP/Mol Zr.h, das Mη lag bei 280 000. Die GPC-Messung ergab ein $M_w$ von 305 000 und ein $M_n$ von 116 000, entsprechend einem $M_w/M_n$-Wert von 2,6. Die APP-Bestimmung erbrachte einen löslichen Anteil von 0,25%.

Beispiel 5

Es wurde wie in Beispiel 1 gearbeitet, jedoch wurde bei 40 °C polymerisiert. Nach 150 Minuten wurden 34,8 g Polymerisat erhalten, wovon ein niedermolekularer Wachsanteil von 7,5 g in Toluol löslich war. Die Aktivität betrug 4150 kg/Mol Zr.h bei einem $M_h$ von 12 000. Die GPC-Messung ergab einen $M_w/M_n$-Wert von 1,6 des in Toluol unlöslichen Anteils.

Beispiel 6

Es wurde wie in Beispiel 1 gearbeitet, jedoch wurde anstelle von Propylen 70 ml 1-Buten einkondensiert und bei −10 °C polymerisiert. Nach 330 Minuten wurde die Polymerisation abgebrochen, das Produkt mit HCl-Lösung gewaschen und das Lösungsmittel abgezogen. Das entstandene Polybuten löste sich bei Temperaturen oberhalb von 30 °C in Toluol. Die Ausbeute betrug 9,1 g, woraus sich eine Aktivität von 500 kg PB/Mol Zr.h ergibt.

Beispiel 7

Es wurde wie in Beispiel 1 gearbeitet mit der Abänderung, daß nur 210 mg Methylaluminoxan und $10^{-6}$ Mol Zirkonverbindung eingesetzt wurden. Anschließend wurden 70 ml Propylen einkondensiert und Ethylen bis zu einem Überdruck von 0,3 bar aufgepreßt. Die Polymerisationszeit betrug 60 Minuten bei 25 °C. Die Aufarbeitung erfolgte wie in Beispiel 5. Es wurden 32,2 g eines Copolymerisates aus Ethylen und Propyleneinheiten erhalten, wobei die Propylensequenzen isotaktisch verknüpft sind.

Beispiel 8

Es wurde wie in Beispiel 7 gearbeitet mit der Abänderung, daß die Zirkonmenge $8.3.10^{-7}$ Mol betrug und daß 15 ml Propylen einkondensiert und Ethylen bis zu einem Überdruck von 5.5 bar aufgepreßt wurden. Die Polymerisationszeit betrug 10 Minuten bei 30 °C. Die Aufarbeitung erfolgte wie in Beispiel 5. Es

wurden 9,4 g eines Copolymerisates aus Ethylen- und Propyleneinheiten erhalten.

Beispiel 9 und Vergleichsbeispiel A

In einem 1000 ml Laborautoklaven wurden 750 ml trockenes Benzin (Siedebereich 100–120 °C) vorgeström Molekularsieb getrocknet und anschließend mit trockenem Argon gespült. Das Lösungsmittel wurde unter 6 bar trockenem Stickstoff auf die Prozeßtemperatur erwärmt. Dabei wurde der Stickstoff dreimal ausgetauscht.

Im Inertgasgegenstrom wurden 500 mg Methylaluminoxan (MAO) hinzugegeben, so daß eine Aktivatorkonzentration von $1,1^{-2}$ mol/l vorlag. Anschließend wurde die Lösung der Ti- bzw. Zr-Verbindung zugegeben. Im Reaktor lag dann eine Katalysatorkonzentration laut Tabelle 2 vor. Unter Rühren (750 l/min) wurden 8 bar Ethylen innerhalb von 5 Minuten aufgedrückt. Nach 2 Stunden Polymerisationszeit wurden die angegebenen Mengen Polyethylen erhalten. Die Ergebnisse sind in der Übersichtstabelle 2 zusammengestellt.

Übersichtstabelle 1

| Beispiel Nr. | Polymeres | Polymerisation Temp. °C | Zeit Min. | Ausbeute g | Aktivität kb/Mol Zr.h | APP-bestimmung % krist. | % lösl. | GPC $M_w/M_n$ | $M\eta$ |
|---|---|---|---|---|---|---|---|---|---|
| 1 | PP | 20 | 120 | 31,3 | 4750 | 99,0 | 1,0 | 1,9 | 41 000 |
| 2 | PP | 15 | 170 | 26,7 | 2880 | 99,3 | 0,7 | 2,0 | 54 000 |
| 3 | PP | 0 | 255 | 12,5 | 880 | 99,8 | 0,2 | 2,4 | 134 000 |
| 4 | PP | −10 | 270 | 4,5 | 300 | 99,75 | 0,25 | 2,6 | 280 000 |
| 4 | PP | 40 | 150 | 27,3 | 4150 | | | 1,6 | 12 000 |
| 6 | PB | −10 | 330 | 9,1 | 500 | | | | |
| 7 | PP/PE | 25 | 60 | 32,2 | 32 300 | | | | |
| 8 | PP/PE | 30 | 10 | 9,4 | 67 900 | | | | |

Übersichtstabelle 2

| (Vergleich) Beispiel Nr. | Versuch Nr. | Kat. | Einsatzkonz. [Mol/l] | MAO-Konz. [Mol/l] | Polym. Temp. [°C] | Auswaage [g] | KZA [gPE/ mMol·h·bar] |
|---|---|---|---|---|---|---|---|
| A | 1 | 1 | $2,6^{-6}$ | $1,1^{-2}$ | 50 | 4,8 | 116 |
| | 2 | 1 | $7,8^{-6}$ | $0,1^{-2}$ | 50 | 10,3 | 83 |
| | 3 | 1 | $2,6^{-6}$ | $1,1^{-2}$ | 60 | 2,0 | 48 |
| | 4 | 1 | $2,6^{-6}$ | $1,1^{-2}$ | 70 | 1,4 | 35 |
| | 5 | 1 | $1,6^{-7}$ | $1,1^{-2}$ | 85 | 0,3 | 133 |
| | 6 | 1 | $7,3^{-7}$ | $1,1^{-2}$ | 85 | 1,7 | 58 |
| | 7 | 1 | $4,0^{-6}$ | $0,1^{-2}$ | 85 | 1,7 | 27 |
| 9 | 8 | 2 | $1,4^{-7}$ | $1,1^{-2}$ | 50 | 2,2 | 980 |
| | 9 | 2 | $1,4^{-7}$ | $1,1^{-2}$ | 60 | 6,7 | 2 990 |
| | 10 | 2 | $1,4^{-7}$ | $1,1^{-2}$ | 70 | 18,9 | 8 438 |
| | 11 | 2 | $1,4^{-7}$ | $1,1^{-2}$ | 80 | 44,6 | 19 900 |
| | 12 | 2 | $1,5^{-7}$ | $0,1^{-2}$ | 85 | 83,5 | 34 790 |

1 = Ethylen-bis-indenyl-titandichlorid
2 = Ethylen-bis-indenyl-zirkondichlorid
MAO = Methylaluminoxan

**Patentansprüche**

1. Verfahren zur Herstellung von Polyolefinen durch Polymerisation von Olefinen der Formel $CH_2=CHR$ mit R = Alkyl $C_1$–$C_{10}$, allein oder in Mischung, gegebenenfalls in Mischung mit Ethylen, in Lösemitteln, flüssigen Monomeren oder in der Gasphase bei einer Temperatur von −50 bis 200 °C mittels einer löslichen Übergangsmetallverbindung und Aluminoxanen, dadurch gekennzeichnet, daß die Polymerisation in Gegenwart eines Katalysatorsystems durchgeführt wird, welches besteht aus

a) Ethylen-bis(4,5,6,7-tetrahydroindenyl)-zirkoniumdichlorid und

b) einer Aluminium enthaltenden Verbindung des Aluminoxantyps der allgemeinen Formeln

$$Al_2OR_4(Al[R]\text{-}O)_n$$

für ein lineares Aluminoxan und

$$(Al[R]\text{-}O)_{n+2}$$

für cyclisches Aluminoxan, in denen n eine ganze Zahl von 4 bis 20 und R ein Methyl- oder Ethylrest ist.

2. Verfahren nach Anspruch 1, dadurch gekennzeichnet, daß als Aluminoxan Methylaluminoxan verwendet wird.

## Claims

1. A process for the preparation of polyolefins by polymerizing olefins of the formula $CH_2=CHR$ in which R = $C_1$-$C_{10}$-alkyl, on their own or as a mixture, if appropriate mixed with ethylene, in solvents, liquid monomers or in the gas phase at a temperature from −50 to 200 °C by means of a soluble transition metal compound and aluminoxanes, which comprises carrying out the polymerization in the presence of a catalyst system which is composed of

a) ethylene-bis-(4,5,6,7-tetrahydroindenyl)-zirconiumdichloride and

b) a compound, containing aluminium, of the aluminoxane type of the formulae

$$Al_2OR_4(Al[R]-O)_n$$

for a linear aluminoxane and

$$(Al[R]-O)_{n+2}$$

for a cyclic aluminoxane in which n is an integer from 4 to 20 and R is a methyl or ethyl radical.

2. The process as claimed in claim 1, wherein methyl aluminoxane is used as the aluminoxane.

## Revendications

1. Procédé pour préparer des polyoléfines par polymérisation d'oléfines répondant à la formule $CH_2=CHR$ dans laquelle R représente un alkyle contenant de 1 à 10 atomes de carbone, isolément ou en mélange, éventuellement en mélange avec de l'éthylène, dans des solvants, dans des monomères liquides ou en phase gazeuse, à une température comprise entre −50 et 200 °C, au moyen d'un composé soluble d'un métal de transition et d'aluminoxanes, procédé caractérisé en ce qu'on effectue la polymérisation en présence d'un système catalytique qui est constitué:

a) de dichlorure d'éthylène-bis-(tétrahydro-4,5,6,7-indényl)-zirconium et

b) d'un composé de l'aluminium du type des aluminoxanes qui, lorsqu'il est un aluminoxane linéaire, répond à la formule générale:

$$Al_2OR_4(Al[R]-O)_n$$

et, lorsqu'il est un aluminoxane cyclique, répond à la formule générale:

$$(Al[R]-O)_{n+2}$$

formules dans lesquelles n désigne un nombre entier de 4 à 20 et R représente un radical méthyle ou éthyle.

2. Procédé selon la revendication 1 caractérisé en ce qu'on utilise un méthyl-aluminoxane comme aluminoxane.